(19) 

(11) **EP 4 790 080 A1**

(12) **EUROPEAN PATENT APPLICATION**
published in accordance with Art. 153(4) EPC

(43) Date of publication:
**12.08.2026 Bulletin 2026/33**

(21) Application number: **24874692.7**

(22) Date of filing: **03.10.2024**

(51) International Patent Classification (IPC):
***C08G 71/02*** *(2006.01)*

(52) Cooperative Patent Classification (CPC):
**C08G 71/02**

(86) International application number:
**PCT/JP2024/035453**

(87) International publication number:
**WO 2025/075092 (10.04.2025 Gazette 2025/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.10.2023 JP 2023173510**

(71) Applicant: **Kuraray Co., Ltd.**
**Kurashiki-shi, Okayama 710-0801 (JP)**

(72) Inventors:
- **UEYAMA Tatsuaki**
  **Tsukuba-shi, Ibaraki 305-0841 (JP)**
- **KONISHI Hiroyuki**
  **Tsukuba-shi, Ibaraki 305-0841 (JP)**

(74) Representative: **Müller-Boré & Partner Patentanwälte PartG mbB**
**Friedenheimer Brücke 21**
**80639 München (DE)**

# (54) THERMOPLASTIC POLYUREA AND MOLDED ARTICLE

(57) A thermoplastic polyurea comprising an aliphatic diamine unit (A) having a linear aliphatic hydrocarbon group and an aliphatic diamine unit (B) having a methyl-branched aliphatic hydrocarbon group having 7 to 12 carbon atoms in the main chain.



Processed by Luminess, 75001 PARIS (FR)

## Description

### Technical Field

The present invention relates to a thermoplastic polyurea and a molded article.

### Background Art

Polyurea is excellent in heat resistance, mechanical strength, and chemical resistance and is used for injection molded articles, fibers, coating agents, and the like. A conventional polyurea is produced by polymerization of urea and formaldehyde or polymerization of diisocyanate and diamine, but the polyurea obtained by the conventional method is a polymer which is difficult to be melt-molded even if it is thermosetting or thermoplastic. Therefore, there is a demand for the development of a thermoplastic polyurea that can be easily melt-molded.

In order to solve the above problems, polymerization using urea and diamine has been proposed. For example, as the diamine component, two or more kinds of linear alkylene diamines having different number of carbon atoms (see, for example, PTL 1), a primary diamine having at least one alkyl group having not more than 3 carbon atoms on any carbon of a linear saturated hydrocarbon group having a specific number of carbon atoms (see, for example, PTL 2), and a mixed system of a primary diamine having at least one alkyl group having not more than 10 carbon atoms on any carbon of a linear saturated aliphatic hydrocarbon group having a specific number of carbon atoms and a linear alkylene diamine having a specific number of carbon atoms (see, for example, PTL 3) are disclosed. According to the techniques described in PTLs 1 to 3, polyureas excellent in various physical and chemical properties such as good mechanical properties, molding processability, and dyeability have been developed.

However, a thermoplastic polyurea having excellent chemical resistance and capable of suppressing coloration during melt molding has not been obtained.

### Citation List

#### Patent Literature

PTL 1: JPS 36-2847 B
PTL 2: JPS 36-22150 B
PTL 3: JPS 36-20249 B

### Summary of Invention

#### Technical Problem

An object of the present invention is to provide a thermoplastic polyurea having excellent chemical resistance and capable of suppressing coloration during melt molding, and a molded article containing the thermoplastic polyurea.

#### Solution to Problem

As a result of intensive studies, the present inventors have found that when an aliphatic diamine unit (A) having a linear aliphatic hydrocarbon group and an aliphatic diamine unit (B) having a methyl-branched aliphatic hydrocarbon group having 7 to 12 carbon atoms in the main chain are contained, a thermoplastic polyurea having excellent chemical resistance and capable of suppressing coloration during melt molding can be obtained, thereby completing the present invention.

That is, the present invention is as described in the following [1] to [7].

[1] A thermoplastic polyurea having an aliphatic diamine unit (A) having a linear aliphatic hydrocarbon group and an aliphatic diamine unit (B) having a methyl-branched aliphatic hydrocarbon group having 7 to 12 carbon atoms in the main chain.
[2] The thermoplastic polyurea according to [1], in which a molar ratio (A/B) of the aliphatic diamine unit (A) to the aliphatic diamine unit (B) is 99/1 to 30/70.
[3] The thermoplastic polyurea according to [1] or [2], in which the linear aliphatic hydrocarbon group has an average number of carbon atoms of 7 to 11.

[4] The thermoplastic polyurea according to any one of [1] to [3], in which a bond between the aliphatic diamine unit (A) and the aliphatic diamine unit (B), a bond between the aliphatic diamine units (A), and a bond between the aliphatic diamine units (B) are urea bonds.

[5] The thermoplastic polyurea according to any one of [1] to [4], in which a carbonyl group in a urea bond of the thermoplastic polyurea is derived from urea.

[6] The thermoplastic polyurea according to any one of [1] to [5], which has a melting point of 220°C or lower.

[7] A molded article containing the thermoplastic polyurea according to any one of [1] to [6].

Advantageous Effects of Invention

According to the present invention, it is possible to provide a thermoplastic polyurea having excellent chemical resistance and capable of suppressing coloration during melt molding, and a molded article containing the thermoplastic polyurea.

Description of Embodiments

Hereinafter, the present invention will be described on the basis of an example of embodiments of the present invention. However, the embodiments described below are illustrative for embodying the technological thought of the present invention, and the present invention is not limited to the following descriptions.

In the description herein, preferred modes of the embodiments are shown, but a combination of two or more of individual preferred modes is also a preferred mode. Regarding the matters indicated by numerical ranges, in a case where there are several numerical ranges, it is possible to selectively combine a lower limit value and an upper limit value thereof to obtain a preferred mode.

In the description herein, when there is a description pertaining to a numerical range of "XX to YY", the description means "XX or more and YY or less".

In the description herein, the "polymer" means a thermoplastic polyurea, the "structural unit" means a "unit constituting a polymer", and the "aliphatic diamine unit" means a "structural unit derived from an aliphatic diamine".

In the description herein, the term "easily melt-molded" means that the number-average molecular weight (Mn) and the weight-average molecular weight (Mw) are not too high, and the melt viscosity is not too high, so that melt molding is easy.

[Thermoplastic Polyurea]

The thermoplastic polyurea of the present invention has an aliphatic diamine unit (A) having a linear aliphatic hydrocarbon group (hereinafter sometimes referred to as "aliphatic diamine unit (A)") and an aliphatic diamine unit (B) having a methyl-branched aliphatic hydrocarbon group having 7 to 12 carbon atoms in the main chain (hereinafter sometimes referred to as "aliphatic diamine unit (B)"), and may further have other structural units as necessary.

In the thermoplastic polyurea of the present invention, all of the bond between the aliphatic diamine unit (A) and the aliphatic diamine unit (B), the bond between the aliphatic diamine units (A), and the bond between the aliphatic diamine units (B) are preferably a urea bond (-NH-C(=O)-NH-).

The thermoplastic polyurea may contain a bond other than the urea bond as long as the effects of the present invention are not impaired.

The carbonyl group (-C(=O)-) in the urea-bond (-NH-C(=O)-NH-) of the thermoplastic polyurea of the present invention is not particularly limited, and may be urea-derived, isocyanate-derived, carbon dioxide-derived, carbonate-derived, or phosgene-derived, and from the viewpoint of productivity, toxicity of raw materials, and availability, the carbonyl group is preferably urea-derived. Here, "urea-derived" is not limited to being derived from urea, and also includes being derived from a urea derivative such as methylene diurea or ethylene diurea.

The thermoplastic polyurea of the present invention can be obtained, for example, by a polycondensation reaction in which an aliphatic diamine having an aliphatic hydrocarbon group and urea or the like are reacted by heating in an approximately equimolar ratio, preferably in an inert gas atmosphere, with or without dissolving in a solvent such as water, phenol or m-cresol, and then the reaction is completed while distilling off the solvent if present.

The aliphatic diamine does not include urea ($H_2N\text{-}C(=O)\text{-}NH_2$).

In the polycondensation reaction, first, heating is performed at a relatively low temperature of 80 to 130°C to produce a low-degree condensation product, generation of ammonia is temporarily stopped, and then the temperature is gradually raised. At about 140 to 190°C, the generation of ammonia becomes active again. The temperature at this time is controlled, and solvents, if present, are distilled off, and the temperature is raised again. After the deammoniation reaction by heating is completed, the heating reaction is continued at a temperature of about 200 to 280°C under reduced pressure. As a result, the polycondensation reaction smoothly proceeds to obtain a linear copolymer.

In addition, a terminal blocking agent, an additive, or the like may be added as an auxiliary raw material of the polycondensation reaction.

Examples of the terminal blocking agent include monoamines such as hexylamine, octylamine, cyclohexylamine, and aniline; and monocarboxylic acids such as acetic acid, lauric acid, and benzoic acid. These may be used singly, or two or more kinds thereof may be used in combination.

The amount of the terminal blocking agent to be added is preferably 5 mol% or less based on the aliphatic diamine compound.

Examples of the additive include an antioxidant, an antistatic agent, a flame retardant, a flame retardant aid, and a heat stabilizer. These may be used singly, or two or more kinds thereof may be used in combination.

The melting point of the thermoplastic polyurea of the present invention is preferably 220°C or lower, more preferably 215°C or lower, and particularly preferably 210°C or lower, from the viewpoint of reducing coloration during melt molding, and on the other hand, it is preferably 150°C or higher, more preferably 160°C or higher, and particularly preferably 170°C or higher, from the viewpoint of heat resistance.

The melting point of the thermoplastic polyurea of the present invention is preferably 150 to 220°C, more preferably 160 to 215°C, and particularly preferably 170 to 210°C or lower.

The melting point of the thermoplastic polyurea of the present invention can be measured by the method used in the examples described later.

The arrangement order of the aliphatic diamine unit (A), the aliphatic diamine unit (B), and any other structural unit in the thermoplastic polyurea of the present invention is not particularly limited, and may be any of random, block, alternating, and the like.

The total of the aliphatic diamine unit (A) and the aliphatic diamine unit (B) is preferably 70 mol% or more, more preferably 80 mol% or more, particularly preferably 90 mol% or more, and most preferably 100 mol% with respect to 100 mol% of all structural units (excluding bonding portions between structural units) in the thermoplastic polyurea. That is, it is preferable that a structural unit other than the aliphatic diamine unit (A) and the aliphatic diamine unit (B) is not present.

The total of the aliphatic diamine unit (A) and the aliphatic diamine unit (B) with respect to 100 mol% of all structural units (excluding bonding portions between structural units) in the thermoplastic polyurea can be measured by, for example, NMR.

The ratio of the diamine unit constituting the aliphatic diamine unit (A), the aliphatic diamine unit (B), and the like is calculated from integrated values of the peaks at 0.6 to 1.2 ppm assigned to the proton bonded to a methyl branch of the aliphatic diamine unit (B), the peaks at 1.2 to 2.0 ppm assigned to the proton bonded to a methylene chain of the aliphatic diamine unit (A) or the aliphatic diamine unit (B), and the peaks at 2.0 to 3.0 ppm assigned to the proton bonded to a methylene chain adjacent to an amino group of the aliphatic diamine unit (A) or the aliphatic diamine unit (B) in $^{1}$H-NMR measurements.

The term "bonding portions between structural units" means, for example, (1) when the structural units are two kinds of the aliphatic diamine unit (A) and the aliphatic diamine unit (B), three kinds of bonding portions of a bond between the aliphatic diamine unit (A) and the aliphatic diamine unit (B), a bond between the aliphatic diamine units (A), and a bond between the aliphatic diamine units (B), and (2) when the structural units are three kinds of the aliphatic diamine unit (A), the aliphatic diamine unit (B), and another structural unit, six kinds of bonding portions of a bond between the aliphatic diamine unit (A) and the aliphatic diamine unit (B), a bond between the aliphatic diamine unit (A) and another structural unit, a bond between the aliphatic diamine unit (B) and another structural unit, a bond between the aliphatic diamine units (A), a bond between the aliphatic diamine units (B), and a bond between other structural units.

The weight-average molecular weight (Mw) of the thermoplastic polyurea is preferably 10,000 or more from the viewpoint of chemical resistance and mechanical strength, and on the other hand, it is preferably 100,000 or less from the viewpoint of melt moldability.

The weight-average molecular weight (Mw) of the thermoplastic polyurea is preferably 10,000 to 100,000.

The weight-average molecular weight (Mw) of the thermoplastic polyurea is a weight-average molecular weight (Mw) in terms of polymethyl methacrylate (manufactured by Resonac Corporation) measured using gel permeation chromatography (GPC) under the following measurement conditions.

<Measurement Conditions>

Measurement apparatus: HLC-8320GPC

Column:

TSKgel SUPER AW-H Guard Column manufactured by Tosoh Corporation, one column

TSKgel SUPER AWM-H manufactured by Tosoh Corporation, two columns

TSKgel SUPER H-RC manufactured by Tosoh Corporation, one column
Solvent: Hexafluoroisopropanol containing 12 mM sodium trifluoroacetate
Flow rate: 0.5 mL/min
Measurement temperature: 40°C

The number-average molecular weight (Mn) of the thermoplastic polyurea is preferably 2,000 or more from the viewpoint of chemical resistance and mechanical strength, and on the other hand, it is preferably 50,000 or less from the viewpoint of melt moldability.
The number-average molecular weight (Mn) of the thermoplastic polyurea is preferably 2,000 to 50,000.
The number-average molecular weight (Mn) of the thermoplastic polyurea is a number-average molecular weight (Mn) in terms of polymethyl methacrylate (manufactured by Resonac Corporation) measured using gel permeation chromatography (GPC) under the following measurement conditions.

<Measurement Conditions>

Measurement apparatus: HLC-8320GPC
Column:

TSKgel SUPER AW-H Guard Column manufactured by Tosoh Corporation, one column
TSKgel SUPER AWM-H manufactured by Tosoh Corporation, two columns
TSKgel SUPER H-RC manufactured by Tosoh Corporation, one column
Solvent: Hexafluoroisopropanol containing 12 mM sodium trifluoroacetate
Flow rate: 0.5 mL/min
Measurement temperature: 40°C

The molecular weight distribution (Mw/Mn) of the thermoplastic polyurea is preferably 1.1 or more from the viewpoint of production difficulty, and on the other hand, it is preferably 10 or less from the viewpoint of melt moldability.
The molecular weight distribution (Mw/Mn) of the thermoplastic polyurea is preferably 1.1 to 10.

<Aliphatic Diamine Unit (A)>

The aliphatic diamine unit (A) is a structural unit derived from an aliphatic diamine having a linear aliphatic hydrocarbon group, and may or may not further have a group other than the hydrocarbon group as necessary.
Here, the aliphatic diamine having a linear aliphatic hydrocarbon group means an aliphatic diamine in which an amino group is bonded to both terminals of the linear aliphatic hydrocarbon group.
The linear aliphatic hydrocarbon group means a linear divalent aliphatic hydrocarbon group having no branched chain.
The linear aliphatic hydrocarbon group may be a saturated hydrocarbon group or an unsaturated hydrocarbon group, and is preferably a saturated hydrocarbon group.
The linear aliphatic hydrocarbon group is preferably an unsubstituted hydrocarbon group having only carbon and hydrogen.
Examples of the aliphatic diamine having a linear aliphatic hydrocarbon group, which constitutes the aliphatic diamine unit (A), include 1,3-propanediamine, 1,4-butanediamine, 1,5-pentanediamine (1,5-pentamethylenediamine), 1,6-hexanediamine (1,6-hexamethylenediamine), 1,7-heptanediamine (1,7-heptamethylenediamine), 1,8-octanediamine (1,8-octamethylenediamine), 1,9-nonanediamine (1,9-nonamethylenediamine), 1,10-decanediamine (1,10-decamethylenediamine), 1,11-undecanediamine (1,11-undecamethylenediamine), and 1,12-dodecanediamine (1,12-dodecamethylenediamine). These may be used alone, or two or more kinds thereof may be used in combination.
Among these, 1,7-heptanediamine (1,7-heptamethylenediamine), 1,8-octanediamine (1,8-octamethylenediamine), 1,9-nonanediamine (1,9-nonamethylenediamine), 1,10-decanediamine (1,10-decamethylenediamine), 1,11-undecanediamine (1,11-undecamethylenediamine), and 1,12-dodecanediamine (1,12-dodecamethylenediamine) are preferable, and 1,9-nonanediamine (1,9-nonamethylenediamine) is particularly preferable, from the viewpoint of achieving both reduction in coloration during melt molding and chemical resistance.
The aliphatic diamine unit (A) may be used alone or in combination of two or more kinds thereof. The molar amount of the aliphatic diamine unit (A) when there are two or more kinds of the aliphatic diamine units (A) means the sum of the molar amounts of the respective aliphatic diamine units (A).
The average number of carbon atoms of the linear aliphatic hydrocarbon group in the aliphatic diamine unit (A) is

not particularly limited, but is preferably 7 or more and 11 or less, more preferably 8 or more and 10 or less, and particularly preferably 9 from the viewpoint of achieving both improvement of the chemical resistance of the thermoplastic polyurea and suppression of coloration during melting.

The "average number of carbon atoms of the linear aliphatic hydrocarbon group in the aliphatic diamine unit (A)" is calculated from the molar ratio of each component in the aliphatic diamine (A), and for example, in Example 5 described later, it is calculated as $9 \times 1/(1 + 84) + 12 \times 84/(1 + 84) = 12$. Note that, in the calculation of the average number of carbon atoms, the fractional part is rounded off.

<Aliphatic Diamine Unit (B)>

The aliphatic diamine unit (B) is a structural unit derived from an aliphatic diamine having a methyl-branched aliphatic hydrocarbon group having 7 to 12 carbon atoms in the main chain, and may or may not further have other groups as necessary.

The methyl-branched aliphatic hydrocarbon group means a divalent aliphatic hydrocarbon group having a methyl group as a branched chain, and does not include a branched aliphatic hydrocarbon group having a methyl group and another branched chain (for example, an ethyl group or a propyl group) as branched chains.

When the branched group in the aliphatic hydrocarbon group in the aliphatic diamine unit (B) is a methyl group instead of an ethyl group or a propyl group, the thermoplastic polyurea can be easily aggregated to improve the crystallinity as compared with the case where the branching group is an ethyl group or a propyl group, thereby improving the chemical resistance of the thermoplastic polyurea. By setting the number of carbon atoms in the main chain of the aliphatic diamine unit (B) to a certain number or more, the aggregation inhibition effect by the branched group is reduced, and the chemical resistance can be improved.

In addition, by having a methyl branched group, since the crystallinity is reduced as compared with the case where there is no branched group, melt molding at a low temperature becomes possible, and coloration during melt molding is reduced.

Examples of the aliphatic diamine having a methyl-branched aliphatic hydrocarbon group having 7 to 12 carbon atoms in the main chain, which constitutes the aliphatic diamine unit (B), include 2-methyl-1,7-heptanediamine, 2-methyl-1,8-octanediamine, 2-methyl-1,9-nonanediamine, 2-methyl-1,10-decanediamine, 2-methyl-1,11-undecanediamine, 2-methyl-1,12-dodecanediamine, 1,3-dimethyl-1,8-octanediamine, 1,4-dimethyl-1,8-octanediamine, 2,4-dimethyl-1,8-octanediamine, 2,2,4-trimethyl-1,8-octanediamine, and 2,4,4-trimethyl-1,8-octanediamine. These may be used alone, or two or more kinds thereof may be used in combination.

Among these, 2-methyl-1,7-heptanediamine, 2-methyl-1,8-octanediamine, 2-methyl-1,9-nonanediamine, 2-methyl-1,10-decanediamine, and 2-methyl-1,11-undecanediamine are preferable, 2-methyl-1,7-heptanediamine, 2-methyl-1,8-octanediamine, 2-methyl-1,9-nonanediamine, and 2-methyl-1,10-decanediamine are more preferable, and 2-methyl-1,8-octanediamine and 2-methyl-1,9-nonanediamine are particularly preferable from the viewpoint of achieving both chemical resistance and reduction in coloration during melt molding.

The aliphatic diamine unit (B) may be used alone or in combination of two or more kinds thereof.

The molar amount of the aliphatic diamine unit (B) when there are two or more kinds of the aliphatic diamine units (B) means the sum of the molar amounts of the respective aliphatic diamine units (B).

The number of carbon atoms in the main chain of the aliphatic diamine unit (B) is not particularly limited as long as it is 7 to 12, but it is preferably 7 to 11, more preferably 7 to 10, and particularly preferably 8 to 9 from the viewpoint of achieving both chemical resistance and reduction in coloration during melt molding.

When the number of carbon atoms in the main chain of the methyl-branched aliphatic hydrocarbon group in the aliphatic diamine unit (B) is 7 or more, the chemical resistance can be maintained while suppressing coloration during melt molding of the thermoplastic polyurea, and on the other hand, when the number of carbon atoms in the main chain is 12 or less, the chemical resistance of the thermoplastic polyurea can be improved.

The number of carbon atoms in the main chain of the aliphatic diamine unit (B) is the "number of carbon atoms excluding the carbon atom of a methyl branch". For example, the number of carbon atoms in the main chain of "2-methyl-1,8-octanediamine" is "8".

The number of methyl groups as the branched chain may be one, or may be two or more. The methyl-branched aliphatic hydrocarbyl group may be a saturated hydrocarbon group or may be an unsaturated hydrocarbon group, and preferably a saturated hydrocarbon group. The methyl-branched aliphatic hydrocarbon group is preferably an unsubstituted hydrocarbon group having only carbon and hydrogen.

The molar ratio (A/B) of the aliphatic diamine unit (A) to the aliphatic diamine unit (B) is not particularly limited, but is preferably 99/1 to 30/70, more preferably 95/5 to 45/55, still more preferably 90/10 to 60/40, and particularly preferably 90/10 to 80/20 from the viewpoint of achieving both improvement in chemical resistance and suppression of coloration during melting.

By favoring either the aliphatic diamine unit (A) or the aliphatic diamine unit (B), it strongly exhibits the

characteristics of a thermoplastic polyurea composed solely of one diamine, thereby becoming a distinctive thermoplastic polyurea. That is, within the above-mentioned preferred range of the molar ratio (A/B) of the aliphatic diamine unit (A) to the aliphatic diamine unit (B), as the proportion of the aliphatic diamine unit (A) increases, the chemical resistance becomes more excellent, and as the proportion of the aliphatic diamine unit (B) increases, the coloration-reducing effect during melt molding is enhanced.

The thermoplastic polyurea of the present invention can be processed into a molded article described later by a known molding method such as an injection molding method or an extrusion molding method. In addition, it can be processed into various films by a known film forming method such as a T-die method, an inflation method, or a hot press method.

A thermoplastic polyurea composition containing the thermoplastic polyurea of the present invention and a viscosity stabilizer may be processed into a molded article by the above-mentioned molding method.

The viscosity stabilizer is not particularly limited, and examples thereof include monobasic acids, alkylmonoamides, monoamines, and N-acylalkylenediamines.

[Molded Article]

The molded article of the present invention contains the thermoplastic polyurea of the present invention.

The molded article of the present invention refers to one obtained by processing a composition containing the thermoplastic polyurea of the present invention into various molded articles by a known molding method such as an injection molding method, an extrusion molding method, a T-die method, an inflation method, or a hot press method. Examples of the applications of the molded article of the present invention include electric and electronic components, automobile components, industrial components, household goods, medical components, fibers, films, sheets, tubes, hoses, hollow molded components, foam molded articles, and molded articles having any other shapes.

Examples

Hereinafter, the present invention will be described in more detail with reference to Examples, but the present invention is not limited to these Examples. In Examples and Comparative Examples, "%" and "parts" represent "% by mass" and "parts by mass", respectively, unless otherwise specified.

The measurement methods and evaluation methods used in the following Examples and Comparative Examples are described below.

[Melting Point (°C)]

The melting point of the obtained polymer was measured by a differential scanning calorimeter according to the method described in JIS K7121:2012. To be specific, the temperature was raised from 25°C to 240°C at a temperature rising rate of 10°C/min under a nitrogen flow of 50 mL/min, further held at 240°C for 5 minutes, then lowered to 25°C at 10°C/min, further held at 25°C for 5 minutes, and then raised to 240°C at 10°C/min, and the temperature of the endothermic peak on the highest temperature side was taken as the melting point of the polymer.

[Chemical Resistance]

A test was performed in accordance with JIS K7114:2001. To be specific, the prepared dumbbell test piece was subjected to humidity conditioning at 23°C and 50% RH, and then immersed in a solvent of 100 mL at 23°C for 1 week. After immersion for 1 week, the test piece was taken out from the solvent, and the tensile properties were evaluated by a tensile test. The solvent resistance was determined according to the following criteria using a retention rate calculated from the following Equation 1 as an indicator. Methanol (manufactured by FUJIFILM Wako Pure Chemical Corporation) was used as a solvent.

$$\text{Retention rate (\%)} = \{(\text{tensile elastic modulus after solvent immersion})/(\text{tensile elastic modulus before solvent immersion})\} \times 100 \quad \text{(Equation 1)}$$

<Determination Criteria>

A: Retention rate ≥ 60%
B: 60% > Retention rate ≥ 40%

C: 40% > Retention rate

[Suppression of Coloration]

The degree of suppression of coloration of the press film was visually determined according to the following criteria.

<Determination Criteria>

A: Colorless transparent
B: Slight yellowing
C: Clear yellowing

[$^{1}$H-NMR Measurements]

The mixing ratio of a mixture of 2,2,4-trimethyl-1,6-hexanediamine/2,4,4-trimethyl-1,6-hexanediamine (manufactured by Tokyo Chemical Industry Co., Ltd.) was calculated from $^{1}$H-NMR measurements. Specifically, using an NMR measurement apparatus JMTC-40/54/JJ/YH (manufactured by JEOL Ltd.), 5 mg of a sample was dissolved in 1 mL of chloroform-$d_1$ (manufactured by Sigma Aldrich). The measurement conditions were set to a cumulative number of 16 and a measurement temperature of 22°C. The mixing ratio was (2,2,4-trimethyl-1,6-hexanediamine):(2,4,4-trimethyl-1,6-hexanediamine) = 35:65 [mol%] from the integrated values of the peaks at 2.4 to 2.5 ppm assigned to the proton bonded to the 1-position of 2,2,4-trimethyl-1,6-hexanediamine and the proton bonded to the 1-position of 2,4,4-trimethyl-1,6-hexanediamine, the peaks at 2.5 to 2.6 ppm assigned to the proton bonded to the 1-position of 2,4,4-trimethyl-1,6-hexanediamine, and the peaks at 2.6 to 2.8 ppm assigned to the proton bonded to the 6-position of 2,2,4-trimethyl-1,6-hexanediamine and the proton bonded to the 6-position of 2,4,4-trimethyl-1,6-hexanediamine.

(Example 1)

<Polymer Production>

Urea (manufactured by Tokyo Chemical Industry Co., Ltd.), 1,9-nonanediamine, and 2-methyl-1,8-octanediamine were charged into a flask equipped with a device capable of distilling off generated liquid and gas in a molar ratio of urea/1,9-nonanediamine/2-methyl-1,8-octanediamine = 50.0/42.5/7.5. The mixture was heated for 1 hour while raising the temperature from 25°C to 130°C under a nitrogen flow of 50 mL/min. It was then heated for another 1 hour after raising the temperature to 160°C. Further, the temperature was raised to 240°C and then heated for 3 hours to obtain a colorless and transparent polymer. The obtained polymer had a number-average molecular weight of 5,200, a weight-average molecular weight of 14,200, and a molecular weight distribution of 2.7. The melting point of the obtained polymer was measured. The measurement results are shown in Table 1.

<Press Film Forming>

Using a single-action compression molding machine ("IMC-183B" manufactured by Imoto Machinery Co., Ltd.), the obtained polymer was depressurized to -0.1 MPaG using an oil-sealed rotary pump, preheated for 5 minutes at the melting point + 20°C, and then pressed for 30 seconds at 50 kN. Thereafter, the film was pressed for 5 minutes at 70 kgf/cm$^2$ with a cold press apparatus equipped with water flow cooling to prepare a press film having a thickness of 125 μm. The suppression of coloration of the prepared press film was evaluated. The evaluation results are shown in Table 1.

<Preparation of Dumbbell Test Piece>

A small test piece type 1BA was prepared from the obtained polymer using a small kneader ("MC15-HT" manufactured by XPLORE INSTRUMENTS) at a stirring speed of 50 rpm, a kneading temperature of the melting point + 40°C, and a mold temperature of the melting temperature - 60°C, and was subjected to a crystallization treatment in a thermostat at 110°C for 6 hours to obtain a dumbbell test piece. The obtained dumbbell test piece was evaluated for chemical resistance. The evaluation results are shown in Table 1.

(Example 2)

Polymer production, Press film forming, and Preparation of dumbbell test piece were carried out by the same methods as in Example 1 except that the molar ratio of urea, 1,9-nonanediamine, and 2-methyl-1,8-octanediamine was changed from 50.0/42.5/7.5 to 50.0/32.5/17.5 in the polymer production. The obtained polymer had a number-average molecular weight of 6,500, a weight-average molecular weight of 14,500, and a molecular weight distribution of 2.2. The obtained measurement results and evaluation results are shown in Table 1.

(Example 3)

Polymer production, Press film forming, and Preparation of dumbbell test piece were carried out by the same methods as in Example 1 except that the molar ratio of urea, 1,9-nonanediamine, and 2-methyl-1,8-octanediamine was changed from 50.0/42.5/7.5 to 50.0/25.0/25.0 in the polymer production. The obtained polymer had a number-average molecular weight of 4,900, a weight-average molecular weight of 15,000, and a molecular weight distribution of 3.1. The obtained measurement results and evaluation results are shown in Table 1.

(Example 4)

Polymer production, Press film forming, and Preparation of dumbbell test piece were carried out by the same methods as in Example 1 except that in the polymer production, urea, 1,9-nonanediamine, 1,10-decanediamine (manufactured by Tokyo Chemical Industry Co., Ltd.), and 2-methyl-1,8-octanediamine were used in a molar ratio of 50.0/0.5/42.0/7.5 instead of using urea, 1,9-nonanediamine, and 2-methyl-1,8-octanediamine in a molar ratio of 50.0/42.5/7.5. The obtained polymer had a number-average molecular weight of 5,900, a weight-average molecular weight of 13,900, and a molecular weight distribution of 2.3. The obtained measurement results and evaluation results are shown in Table 1.

(Example 5)

Polymer production, Press film forming, and Preparation of dumbbell test piece were carried out by the same methods as in Example 1 except that in the polymer production, urea, 1,9-nonanediamine, 1,12-decanediamine (manufactured by Tokyo Chemical Industry Co., Ltd.), and 2-methyl-1,8-octanediamine were used in a molar ratio of 50.0/0.5/42.0/7.5 instead of using urea, 1,9-nonanediamine, and 2-methyl-1,8-octanediamine in a molar ratio of 50.0/42.5/7.5. The obtained polymer had a number-average molecular weight of 4,500, a weight-average molecular weight of 15,700, and a molecular weight distribution of 3.5. The obtained measurement results and evaluation results are shown in Table 1.

(Comparative Example 1)

Polymer production, Press film forming, and Preparation of dumbbell test piece were carried out by the same methods as in Example 1 except that in the polymer production, urea, 1,10-decanediamine (manufactured by Tokyo Chemical Industry Co., Ltd.), and 2-methyl-1,5-pentanediamine (manufactured by Tokyo Chemical Industry Co., Ltd.) were used in a molar ratio of 50.0/42.5/7.5 instead of using urea, 1,9-nonanediamine, and 2-methyl-1,8-octanediamine in a molar ratio of 50.0/42.5/7.5. The obtained polymer had a number-average molecular weight of 5,100, a weight-average molecular weight of 12,700, and a molecular weight distribution of 2.5. The obtained measurement results and evaluation results are shown in Table 1.

(Comparative Example 2)

Polymer production, Press film forming, and Preparation of dumbbell test piece were carried out by the same methods as in Example 1 except that in the polymer production, urea, 1,10-decanediamine, and 1,3-pentanediamine (manufactured by Tokyo Chemical Industry Co., Ltd.) were used in a molar ratio of 50.0/42.5/7.5 instead of using urea, 1,9-nonanediamine, and 2-methyl-1,8-octanediamine in a molar ratio of 50.0/42.5/7.5. The obtained polymer had a number-average molecular weight of 7,000, a weight-average molecular weight of 13,400, and a molecular weight distribution of 1.9. The obtained measurement results and evaluation results are shown in Table 1.

(Comparative Example 3)

Polymer production, Press film forming, and Preparation of dumbbell test piece were carried out by the same

methods as in Example 1 except that in the polymer production, urea and 1,10-decanediamine were used in a molar ratio of 50.0/50.0 instead of using urea, 1,9-nonanediamine, and 2-methyl-1,8-octanediamine in a molar ratio of 50.0/42.5/7.5. The obtained polymer had a number-average molecular weight of 4,500, a weight-average molecular weight of 14,900, and a molecular weight distribution of 3.3. The obtained measurement results and evaluation results are shown in Table 1.

(Comparative Example 4)

Polymer production, Press film forming, and Preparation of dumbbell test piece were carried out by the same methods as in Example 1 except that in the polymer production, urea and a mixture of 2,2,4-trimethyl-1,6-hexanediamine/2,4,4-trimethyl-1,6-hexanediamine (manufactured by Tokyo Chemical Industry Co., Ltd.) were used in a molar ratio of 50.0/50.0 instead of using urea, 1,9-nonanediamine, and 2-methyl-1,8-octanediamine in a molar ratio of 50.0/42.5/7.5. The obtained polymer had a number-average molecular weight of 4,200, a weight-average molecular weight of 17,100, and a molecular weight distribution of 4.1. The obtained measurement results and evaluation results are shown in Table 1.

[Table 1]

Table 1

| | | Example 1 | Example 2 | Example 3 | Example 4 | Example 5 |
|---|---|---|---|---|---|---|
| Linear aliphatic diamine | Linear aliphatic diamine | 1,9-Nonanediamine (C9): 85 mol% | 1,9-Nonanediamine (C9): 65 mol% | 1,9-Nonanediamine (C9): 50 mol% | 1,9-Nonanediamine (C9): 1 mol%<br>1,10-Decanediamine (C10): 84 mol% | 1,9-Nonanediamine (C9): 1 mol%<br>1,12-Dodecanediamine (C12): 84 mol% |
| | Average number of carbon atoms of linear aliphatic hydrocarbon group | 9 | 9 | 9 | 10 | 12 |
| Branched aliphatic diamine | | 2-Methyl-1,8-octanediamine (C8 + M): 15 mol% | 2-Methyl-1,8-octanediamine (C8 + M): 35 mol% | 2-Methyl-1,8-octanediamine (C8 + M): 50 mol% | 2-Methyl-1,8-octanediamine (C8 + M): 15 mol% | 2-Methyl-1,8-octanediamine (C8 + M): 15 mol% |
| Molar ratio (linear aliphatic diamine (A) / branched aliphatic diamine (B)) | | 85/15 | 65/35 | *50/50* | 85/15 | 85/15 |
| Mn | | 5,200 | 6,500 | 4,900 | 5,900 | 4,500 |
| Mw | | 14,200 | 14,500 | 15,000 | 13,900 | 15,700 |
| Mw/Mn | | 2.7 | 2.2 | 3.1 | 2.3 | 3.5 |
| Melting point | | 208°C | 188°C | 178°C | 211°C | 196°C |
| Chemical resistance | | A | A | B | A | B |
| Suppression of coloration | | A | A | A | A | A |

Table 1 (continued)

| | | Comparative Example 1 | Comparative Example 2 | Comparative Example 3 | Comparative Example 4 |
|---|---|---|---|---|---|
| Linear aliphatic diamine | Linear aliphatic diamine | 1,10-Decanediamine (C10): 85 mol% | 1,10-Decanediamine (C10): 85 mol% | 1,10-Decanediamine (C10): 100 mol% | Absence |
| | Average number of carbon atoms of linear aliphatic hydrocarbon group | 10 | 10 | 10 | - |
| Branched aliphatic diamine | | 2-Methyl-1,5-pentandiamine (C5 + M): 15 mol% | 1,3-Pentanediamine (C3 + Et): 15 mol% | Absence | 2,2,4-Trimethyl-1,6-hexanediamine: (C6 + 3M) 35 mol% |
| | | | | | 2,4,4-Trimethyl-1,6-hexanediamine: (C6 + 3M) 65 mol% |
| Molar ratio (linear aliphatic diamine (A) / branched aliphatic diamine (B)) | | 85/15 | 85/15 | 100/0 | 0/100 |
| Mn | | 5,100 | 7,000 | 4,500 | 4,200 |
| Mw | | 12,700 | 13,400 | 14,900 | 17,100 |
| Mw/Mn | | 2.5 | 1.9 | 3.3 | 4.1 |
| Melting point | | 213°C | 226°C | 230°C | Absence |
| Chemical resistance | | C | B | A | C |
| Suppression of coloration | | A | C | C | A |

From the comparison between Examples 1 to 5 and Comparative Examples 1 to 4, it can be seen that the thermoplastic polyurea having the aliphatic diamine unit (A) having a linear aliphatic hydrocarbon group and the aliphatic diamine unit (B) having a methyl-branched aliphatic hydrocarbon group having 7 to 12 carbon atoms in the main chain has excellent chemical resistance and the occurrence of coloration is suppressed.

From the comparison between Example 5 and Example 1, it can be seen that when the average number of carbon atoms of the linear aliphatic hydrocarbon group in the aliphatic diamine unit (A) decreases from 12 (Example 5) to 9 (Example 1), the melting point is increased (196°C → 208°C), and the chemical resistance is improved (B → A).

From the comparison between Example 3 and Example 1, it can be seen that by changing the molar ratio (linear aliphatic diamine/branched aliphatic diamine) from 50/50 (Example 3) to 85/15 (Example 1), the melting point is increased (178°C → 208°C), and the chemical resistance is improved (B → A).

From the comparison between Comparative Example 1 and Example 1, it can be seen that the chemical resistance is significantly improved (C → A) by changing the number of carbon atoms in the main chain of the methyl-branched aliphatic hydrocarbon group in the aliphatic diamine unit (B) from 5 (Comparative Example 1) to 8 (Example 1).

From the comparison between Comparative Example 2 and Example 1, it can be seen that by changing the number of carbon atoms in the main chain in the aliphatic diamine unit (B) from 3 (Comparative Example 2) to 8 (Example 1), the melting point is significantly lowered (226°C → 208°C) and the occurrence of coloration is suppressed (C → A), and by changing the branch from an ethyl group (Comparative Example 2) to a methyl group (Example 1), the chemical resistance is improved (B → A).

Industrial Applicability

According to the present invention, it is possible to provide a thermoplastic polyurea having excellent chemical resistance and capable of suppressing coloration during melt molding, and a molded article containing the thermoplastic

polyurea.

The thermoplastic polyurea of the present invention can be used for, for example, various substrates of electronic components, housings of electronic components, casings of electronic components, coverlays, electric wire coatings, laminate films, tubes for home electric appliances, industrial hydraulic belts, airless tires, inner liners for tires, seal members, diaphragms, wire cables, bearing retainers, hair dryers, bobbin cases, mixing faucets, medical catheters, display cover films, wearable devices, and the like.

## Claims

1. A thermoplastic polyurea comprising an aliphatic diamine unit (A) having a linear aliphatic hydrocarbon group and an aliphatic diamine unit (B) having a methyl-branched aliphatic hydrocarbon group having 7 to 12 carbon atoms in the main chain.

2. The thermoplastic polyurea according to claim 1, wherein a molar ratio (A/B) of the aliphatic diamine unit (A) to the aliphatic diamine unit (B) is 99/1 to 30/70.

3. The thermoplastic polyurea according to claim 1 or 2, wherein the linear aliphatic hydrocarbon group has an average number of carbon atoms of 7 to 11.

4. The thermoplastic polyurea according to claim 1 or 2, wherein a bond between the aliphatic diamine unit (A) and the aliphatic diamine unit (B), a bond between the aliphatic diamine units (A), and a bond between the aliphatic diamine units (B) are urea bonds.

5. The thermoplastic polyurea according to claim 1 or 2, wherein a carbonyl group in a urea bond of the thermoplastic polyurea is derived from urea.

6. The thermoplastic polyurea according to claim 1 or 2, which has a melting point of 220°C or lower.

7. A molded article comprising the thermoplastic polyurea according to claim 1 or 2.

## INTERNATIONAL SEARCH REPORT

International application No. **PCT/JP2024/035453**

**A. CLASSIFICATION OF SUBJECT MATTER**

***C08G 71/02***(2006.01)i
FI: C08G71/02

According to International Patent Classification (IPC) or to both national classification and IPC

**B. FIELDS SEARCHED**

Minimum documentation searched (classification system followed by classification symbols)

C08G18/00-18/87; C08G71/00-71/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 08-099949 A (HUELS AG) 16 April 1996 (1996-04-16) claims 1-3, examples | 1-7 |
| A | JP 41-000991 B1 (SCHERING AG) 28 January 1966 (1966-01-28) claims, examples | 1-7 |
| A | JP 36-022150 B1 (TOYO KOATSU KOGYO KK) 16 November 1961 (1961-11-16) claims, examples | 1-7 |
| A | JP 36-020249 B1 (TOYO KOATSU KOGYO KK) 24 October 1961 (1961-10-24) claims, examples | 1-7 |
| A | CN 109553740 A (HUNAN KANSAI AUTOMOTIVE COATINGS CO., LTD.) 02 April 2019 (2019-04-02) claims 1-10, examples | 1-7 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **02 December 2024** | **10 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/035453**

| Patent document cited in search report | Publication date (day/month/year) | Patent family member(s) | Publication date (day/month/year) |
|---|---|---|---|
| JP 08-099949 A | 16 April 1996 | US 5550206 A<br>claims 1-3, examples<br>EP 706996 A2<br>CN 1125720 A | |
| JP 41-000991 B1 | 28 January 1966 | (Family: none) | |
| JP 36-022150 B1 | 16 November 1961 | (Family: none) | |
| JP 36-020249 B1 | 24 October 1961 | (Family: none) | |
| CN 109553740 A | 02 April 2019 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S362847 B
- JP S3622150 B
- JP S3620249 B